# EUROPÄISCHE PATENTSCHRIFT

(11) **EP 2 925 832 B1**
(45) Veröffentlichungstag und Bekanntmachung des Hinweises auf die Patenterteilung: **15.03.2017**
(21) Anmeldenummer: 13792387.6
(22) Anmeldetag: 19.11.2013
(51) Int. Cl.: C09K 11/02, C09K 11/08, D01F 1/04

(54) **BESCHICHTUNG VON LUMINOPHOREN**
LUMINOPHORE COATING
REVÊTEMENT DE LUMINOPHORES

(30) Priorität: 03.12.2012 DE 102012222045
(43) Veröffentlichungstag der Anmeldung: 07.10.2015
(73) Patentinhaber: CHT R. BEITLICH GmbH, 72072 Tübingen (DE); Lenzing Aktiengesellschaft, 4860 Lenzing (AT)
(72) Erfinder: DANIELEC, Holger, 10629 Berlin (DE); LUTZ, Harald, 72124 Pliezhausen (DE); SCHMID, Andreas, 72770 Reutlingen (DE); ROLLBÜHLER, Tobias, 71126 Gäufelden (DE); BACHUS, Herbert, 72379 Hechingen (DE)
(74) Vertreter: dompatent von Kreisler Selting Werner - Partnerschaft von Patent- und Rechtsanwälten mbB
(86) Internationale Anmeldenummer: PCT/EP2013/074185
(87) Internationale Veröffentlichungsnummer: WO 2014/086579

(56) Entgegenhaltungen:
- EP-A2- 2 135 916
- WO-A1-2008/092529
- US-A1- 2001 045 677
- US-A1- 2004 126 615
- US-A1- 2004 191 518

## Beschreibung

Die Erfindung betrifft natürliche und/oder synthetische Fasern, daraus gefertigte Textilien, Formkörper und Halbzeuge enthaltend stabilisierte Luminophore und insbesondere deren Anwendung in und auf textilen Gütern.

Lumineszierende Fasern sind dem Fachmann seit langem durch den Einsatz von organischen, ultraviolett-aktiven Farbstoffen bekannt. Die geringe Lichtstabilität dieser organischen Farbstoffe ist aber für dauerhafte Anwendungen ungeeignet. Thermoplastische Fasermaterialien, die fluoreszierende Pigmente enthalten, werden in DE 3434971 A1 offenbart.

Lumineszierende Regeneratfasern sind auf Basis von UV-aktiven anorganischen Pigmenten in DE 195 39 315 A1 beschrieben. Darin ist die Einbringung von lumineszierenden Pigmenten (Luminophor) in die Fasern während des Spinnprozesses dargestellt. Überraschend ist die hier erwähnte Pigmentgröße kleiner 1 µm, da aus der JP 87-327866 und der DE 19934436 B4 bekannt ist, dass lumineszierende Pigmente, insbesondere solche auf Basis dotierter Seltener Erden, an Leuchtkraft verlieren, sobald man sie auf eine Größe von kleiner 1 µm vermahlt. Den Einsatz solcher Fasern für Banknoten und Sicherheitspapiere beschreibt DE 198 02 588 A1. Den genannten Schriften liegt ein hoher Mengenzuschlag der Luminophore zugrunde, um den gewünschten Effekt zu erreichen. Dies ist sehr unwirtschaftlich, jedoch technisch notwendig, da bei dem Viskoseprozess Verweilzeiten in heißen schwefelsauren Bädern notwendig sind, bei denen die säurelabilen Luminophore zumindest teilweise abgebaut werden. Zudem setzen sich aufgrund ihrer relativ hohen Dichte die anorganischen Pigmente schnell im Prozess und aus der Spinnmasselösung ab, wodurch nur ein Teil der eingesetzten Pigmente tatsächlich zur Markierung der Fasern dient und zusätzlich weitere Zuschlagmengen erforderlich sind.

US 2004/0126615 A1 beschreibt ein Verfahren zur Herstellung eines beschichteten Leuchtstoffs enthaltend den Verfahrensschritt des Applizierens oder Einbringens des Leuchtstoffs in eine Faser beziehungsweise Gewebe. Mögliche Verfahren zur Beschichtung des Leuchtstoffs sind in [0015] offenbart.

Die der Erfindung zugrunde liegende Aufgabe besteht in der Bereitstellung natürliche und/oder synthetische Fasern, daraus gefertigte Textilien, Formkörper und Halbzeuge enthaltend stabilisierter Luminophore und insbesondere deren Bereitstellung für die Anwendung in textilen Produkten, Vorprodukten und Halbzeugen.

In einer ersten Ausführungsform der Erfindung wird die vorgenannte Aufgabe gelöst durch natürliche und/oder synthetische Fasern, daraus gefertigte Textilien, Formkörper und Halbzeuge enthaltend Luminophore mit einer Oberflächenbeschichtung auf der Basis von organischen, anorganisch-organischen und/oder anorganischen Beschichtungsmitteln in der Masse und/oder der Oberfläche, wobei die Menge von Luminophor zu trockener Faser, trockenem Textil, trockenem Formkörper oder trockenem Halbzeug 0,01 bis 100 ppm beträgt.

Ein Vorteil der Erfindung ist, dass zur Fertigung lumineszierender Fasern und daraus gefertigter Textilien die Luminophore in einer homogenen Verteilung unter Erhalt der textilen Eigenschaften eingebracht werden können. Erfindungsgemäß können die stabilisierten lumineszierenden Pigmente (Luminophore) in die Spinnmasse ein- oder durch nachträgliche Applikation auf der Oberfläche von textilen Fasern, Flächengebilden, Produkten oder Halbzeugen aufgebracht werden.

Ein besonderer Vorteil der Erfindung ist die hohe Wirtschaftlichkeit, da durch die Beschichtung der Luminophore deren Stabilität, besonders gegen Säuren, heraufgesetzt wird und somit ihr Einsatz in schwefelsauren Spinnbädern, wie sie beim Viskoseverfahren eingesetzt werden, möglich wird, ohne dass sich wesentliche Anteile der Pigmente zersetzen.

Überraschenderweise wurde gefunden, dass durch besondere Zusätze und / oder eine geeignete Beschichtung der lumineszenten Partikel eine ausreichende Stabilität auch säureempfindlicher Pigmente im Spinnbad möglich ist. Besonders überraschend wurde gefunden, dass dadurch sehr geringe Zuschlagmengen von Luminophor im Verhältnis zu trockener Faser von 0,01 bis 100 ppm (ppm entspricht 1 mg pro kg), vorzugsweise 0,1 bis 50 ppm, besonders bevorzugt 0,5 bis 10 ppm ausreichend sind und daher eine optimale Verteilung in der Spinnmasse gegeben ist und daraus eine homogene Markierung der Fasern resultiert.

Überraschend positiv in der Wirkung ist der Schutz vor Säuren durch Zusätze an sich bekannter Binder oder rheologischer Additive, deren Wirkungsmechanismus nicht bekannt ist.

Bekanntermaßen neigen Partikel umso mehr dazu, sich im Herstellprozess der Fasern unerwünscht abzusetzen, je größer ihr Durchmesser ist. Wird durch Einstellung einer möglichst geringen Teilchengröße diese Eigenschaft optimiert, ist die Säureempfindlichkeit aufgrund der größeren relativen Oberfläche umso stärker ausgeprägt. Überraschenderweise wurde gefunden, dass Teilchengrößen von 0,5 µm bis 1,0 µm (Laserbeugung, Teilchenzahl, d₅₀), bevorzugt 0,6 µm bis 0,9 µm, immer noch ausreichend gegen den Säureeinfluss im Herstellprozess geschützt sind und sich dennoch hervorragend dispergieren lassen, wodurch Inhomogenitäten auf den erzeugten Fasern und daraus gefertigten Halbzeugen zu vermieden werden. Ferner bilden sich keine störenden Ablagerungen auf Maschinenteilen, wodurch übliche kontinuierliche Prozesse nicht nachteilig beeinflusst werden.

Bekanntermaßen verändern sich die textilen Eigenschaften einer Faser und daraus gefertigter Halbzeuge und Produkte durch den Einsatz von festen Additiven wie Pigmenten nachteilig. So werden insbesondere der Griff und die Reißfestigkeit der Faser verschlechtert. Durch eine geringe Einsatzmenge, die erfindungsgemäß bevorzugt ist, werden die nachteiligen Effekte überraschenderweise umgangen.

Als Luminophore oder lumineszente Pigmente werden im Sinne der Erfindung anorganische Pigmente mit lumineszierenden Eigenschaften bezeichnet. Als lumineszierende Eigenschaften sind im Sinne dieser Erfindung vorzugsweise photolumineszierende Eigenschaften wie Fluoreszenz und / oder Phosphoreszenz zu verstehen. Besonders bevorzugt eingesetzt werden phosphoreszierende Luminophore, da durch die längere Lebensdauer der Phosphoreszenz gegenüber der Fluoreszenz, eine bessere Auslesbarkeit der Luminophore möglich wird. Insbesondere umfasst dies Anti-Stokes- und Stokes-Partikel, die einen Upconversion- bzw. Downconversioneffekt aufweisen. Besonders bevorzugt sind solche, die eine Anregung im nicht-sichtbaren Licht, wie UV- oder IR-Licht und eine Emission im sichtbaren und / oder im nicht-sichtbaren Licht aufweisen. Solche Verbindungen sind dem Fachmann seit langem bekannt (vgl. Luminescence - From Theory to Applications, ed. C. R. Ronda, Wiley-VCH Verlag, 2008, S. 133-177).

Die Luminophore umfassen insbesondere binäre, ternäre oder quarternäre Halogenide, Oxide, Oxyhalogenide, Sulfide, Oxysulfide, Sulfate, Oxysulfate, Nitride, Oxynitride, Nitrate, Oxynitrate, Phosphide, Phosphate, Halophospate, Carbonate, Silikate, Oxysilikate, Vanadate, Molybdate, Wolframate, Germanate oder Oxygermanate der Elemente Lithium, Natrium, Kalium, Rubidium, Magnesium, Calcium, Strontium, Scandium, Yttrium, Lanthan, Titan, Zirkon, Hafnium, Niob, Tantal, Zink, Gadolinium, Lutetium, Aluminium, Gallium und Indium. Diese anorganischen Festkörperverbindungen sind selbstaktiviert (Donor-Akzeptor-Lumineszenz oder Charge-Transfer-Lumineszenz) oder mit Ionen der folgenden Metalle aktiviert: Indium, Zinn, Blei, Antimon, Bismut, Cer, Praseodym, Neodym, Samarium, Europium, Gadolinium, Terbium, Dysprosium, Holmium, Erbium, Thulium, Ytterbium, Titan, Vanadium, Mangan, Eisen, Kobalt, Nickel, Kupfer, Ruthenium, Palladium, Silber, Iridium, Platin und Gold.

Beschichtungen von Pigmenten sind dem Fachmann aus zahlreichen Anwendungen bekannt. Als Beispiel dient die Verhinderung der Photokatalyse von Titandioxidpartikeln, die standardmäßig mit verschiedenen, vorzugsweise anorganischen Beschichtungen, versehen werden. Auch Oberflächenfunktionalisierungen von Luminophoren sind bekannt, um die Dispergierbarkeit der Pigmente in wässrigen oder organischen Lösungsmitteln zu erhöhen (vgl. Phosphor Handbook, ed. W. M. Yen, S. Shionoya, H. Yamamoto, 2nd ed., CRC Press, 2007, S. 396-397).

Aus DE 10 2009 056634 A1 und dem darin aufgeführten Stand der Technik ist die Verwendung von Silanol- oder Wasserglas basierten Beschichtungen zur Verbesserung der Stabilität von Partikeln bekannt, die in aufwändigen Verfahren wie Beschichtung und anschließende Trocknung aufgebracht werden. Diese Beschichtungen sind von der vorliegenden Erfindung nicht umfasst.

Als geeignete Beschichtungen für die Luminophore kommen erfindungsgemäß organische, anorganisch-organische und / oder anorganische Beschichtungen infrage. Als bevorzugte anorganische Beschichtung können Silikate, Phosphate, Pyrophosphate und / oder Polyphosphaten eingesetzt werden. Als organische Beschichtung werden Polymere, beispielsweise Homo-, Co- oder Terpolymere auf Basis von Polyacrylaten, Polyurethanen, Styrol-Butadienen, Polybutadiene, Epoxidharzen, Ethylvinylacetat, Polyesterharzen oder von Mischungen und / oder Reaktionsprodukte dieser Klassen in der Erfindung eingesetzt. Bevorzugt sind im Sinne der Erfindung quervernetzte, quervernetzende oder reaktive Systeme, insbesondere solche, die mit der Oberfläche der Partikel chemische oder assoziative Bindungen eingehen können. Die Beschichtung kann in Lösung oder Dispersion auf dem lumineszierenden Pigment abgeschieden werden und die so erhaltene Dispersion oder Lösung sofort verwendet werden. Alternativ kann das beschichtete Pigment abgetrennt, beispielsweise abfiltriert, und getrocknet werden.

Als Ausgangskomponente für die Klasse der Polyurethane eignen sich aliphatische, cycloaliphatische, araliphatische, aromatische und heterocyclische Polyisocyanate, wie sie beispielsweise von W. Siefken in Justus Liebigs Annalen der Chemie, 562, Seiten 75 bis 136, beschrieben werden, beispielsweise solche der Formel

Q(NCO)ₙ

in der n = 2 bis 4, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen aliphatischen Kohlenwasserstoffrest mit 8 bis 15, vorzugsweise 8 bis 13 C-Atomen, bedeuten, beispielsweise Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische diese Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'- diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), und/oder Naphthylen-1,5-diisocyanat (NDI).

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und beispielsweise in GB-PS 874 430 und GB-PS 848 671 beschrieben werden, m- und p-Isocyanatophenylsulfonylisocyanate gemäß US 3 454 606 A, perchlorierte Arylpolyisocyanate, wie sie in US 3 277 138 A beschrieben werden, Carbodiimidgruppen aufweisende Polyisocyanate, wie sie in US 3 152 162 A sowie in DE 25 04 400 A, DE 25 37 685 A und DE 25 52 350 A beschrieben werden, Norbornandiisocyanate gemäß US 3 492 301 A, Allophanatgruppen aufweisende Polyisocyanate, wie sie in GB 994 890 A, der BE 761 626 A und NL 7 102 524 A beschrieben werden, Isocyanuratgruppen aufweisende Polyisocyanate, wie sie in US 3 001 9731 A, in DE 10 22 789 C, DE 12 22 067 C und DE 10 27 394 C sowie in DE 19 29 034 A und DE 20 04 048 A beschrieben werden, Urethangruppen aufweisende Polyisocyanate, wie sie beispielsweise in der BE 752 261 C oder in US 3 394 164 A und US 3 644 457 A beschrieben werden, acylierte Harnstoffgruppen aufweisende Polyisocyanate gemäß DE 12 30 778 C, Biuretgruppen aufweisende Polyisocyanate, wie sie in US 3 124 605 A, US 3 201 372 A und US 3 124 605 A sowie in GB 889 050 A beschrieben werden, durch Telomerisationsreaktionen hergestellte Polyisocyanate, wie sie in US 3 654 106 A beschrieben werden, Estergruppen aufweisende Polyisocyanate, wie sie in GB 965 474 A und GB 1 072 956 A, in US 3 567 763 A und in DE 12 31 688 B genannt werden, Umsetzungsprodukte der oben genannten Isocyanate mit Acetalen gemäß DE 10 72 385 C und polymere Fettsäureester enthaltende Polyisocyanate gemäß US 3 455 883 A.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, beispielsweise das 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylenpolyisocyanat, wie sie durch Anilin-Formaldehyd-Kondensation und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat beziehungsweise vom 4,4'- und/oder 2,4'-Diphenylmethandiisocyanat ableiten. Gut geeignet sind auch Naphthylen-1,5-diisocyanat und Gemische der genannten Polyisocyanate.

Polyacrylate im Sinne der vorliegenden Erfindung werden insbesondere hergestellt durch Lösungs-, Fällungs-, Emulsions- oder inverse Emulsionspolymerisation.

Acrylate sind vorzugsweise ausgewählt aus der Gruppe 1,4-Butanediol di(meth)acrylat, 1,6-Hexanediol di(meth)acrylat, Neopentyl glycol di(meth)acrylat, Polyethylene glycol di(meth)acrylat, Neopentyl glycol adipat di(meth)acrylat, Neopentyl glycol hydroxypivalat di(meth)acrylat, Dicyclopentanyl di(meth)acrylat, Dicylopentenyl di(meth)acrylat modifiziert mit Caprolactam, Phosphorsäure di(meth)acrylat modifiziert mit Ethylenoxid, Cyclohexyl di(meth)acrylat modifiziert mit einer Allygruppe, Isocyanurat di(meth)acrylat, Trimethylolpropan tri(meth)acrylat, Dipentaerythritol tri(meth)acrylat, Dipentaerythritol tri(meth)acrylat modifiziert mit Propionsäure, Pentaerythritol tri(meth)acrylat, Trimethylolpropan tri(meth)acrylat modifiziert mit Propylenoxid, Tris(acryloxyethyl) isocyanurat, Dipentaerythritol penta(meth)acrylat modifiziert mit Propionsäure, Dipentaerythritol hexa(meth)acrylat, Dipentaerythritol hexa(meth)acrylat modifiziert mit Caprolactam, (Meth)acrylatestern monofunktionelle (Meth)acrylat, wie etwa Methyl(meth)acrylat, Ethyl(meth)acrylat, Isopropyl(meth)acrylat, 2- Ethylhexyl(meth)acrylat, Butyl(meth)acrylat, Cyclohexyl(meth)-acrylat, Tetrahydrofurfuryl(meth)acrylat, 2-Hydroxyethyl(meth)acrylat, 2-Hydroxypropyl(meth)acrylat, Polyethylenglykolmono(meth)acrylat, Methoxypolyethylenglykolmono(meth)acrylat, Polypropylenglykolmono-(meth)acrylat, Polyethylenglykol-polypropylenglykolmono(meth)acrylat, Polyethylenglykol-polytetrtamethylenglykolmono(meth)acrylat und Glycidyl(meth)acrylat; difunktionelles (Meth)acrylat, wie etwa Ethylenglykoldi(meth)acrylat, Diethylenglykoldi(meth)acrylat, Triethylenglykoldi(meth)acrylat, Tetraethylenglykoldi(meth)acrylat, Polyethylenglykoldi(meth)acrylat, Polypropylenglykoldi(meth)acrylat, Neopentylglykoldi(meth)acrylat, Allyl(meth)acrylat, Bisphenol-A-di(meth)acrylat, Ethylenoxid-modifiziertes Bisphenol-A-di(meth)acrylat, Polyethylenoxidmodifiziertes Bisphenol-A-di(meth)acrylat, Ethylenoxid-modifiziertes Bisphenol-S-di(meth)acrylat, Bisphenol-S-di(meth)acrylat, 1,4-Butandioldi(meth)acrylat, und 1,3-Butylenglykol-di(meth)acrylat; und tri- und höherfunktionelle (Meth)acrylat, wie etwa Trimethylolpropantri(meth)acrylat, Glycerintri(meth)acrylat, Pentaerythrit-tri(meth)acrylat, Pentraerythrit-tetra(meth)acrylat, Ethylenmodifiziertes Trimethylolpropantri(meth)acrylat, Dipentaerythrithexa(meth)acrylat, 2-Hydroxyethyl (meth)acrylat, 2-Hydroxypropyl (meth)acrylat, Isobutyl (meth)acrylat, t-Butyl (meth)acrylat, 2-Ethylhexyl (meth)acrylat, Stearylacrylat, .2-Ethylhexylcarbitolacrylat, omega -Carboxypolycaprolactam monoacrylat, Acryloyloxyethylische Säure, Acrylsäuredimer, Lauryl (meth)acrylat, 2-Methoxyethyl acrylat, Butoxyethyl acrylat, Ethoxyethoxyethyl acrylat, Methoxytriethylen glycol acrylat, Methoxypolyethylen glycol acrylat, Stearyl (meth)acrylat, Cyclohexyl (meth)acrylat, Tetrahydrofurfuryl (meth)acrylat, N-vinyl-2-pyrrolidon, Isobornyl (meth)acrylat, Dicyclopentenyl acrylat, Benzyl acrylat, Phenyl glycidyl ether epoxyacrylat, Phenoxyethyl (meth)acrylat, Phenoxy(poly)ethylen glycol acrylat, Nonylphenol ethoxyliertes acrylat, Acryloyloxyethylphthalsäure, Tribromophenyl acrylat, Tribromophenol ethoxyliertes (meth)acrylat, Methyl methacrylat, Tribromophenyl methacrylat, Methacryloxyethylsäure, Methacryloyloxyethylmaleinsäure, Methacryloyloxyethylhexahydrophthalsäure, Methacryloyloxyethylphthalsäure, Polyethylene glycol (meth)acrylat, Polypropylen glycol (meth)acrylat, beta -Carboxyethyl acrylat, N-methylol acrylamide, N-methoxymethyl acrylamide, N-ethoxymethyl acrylamid, N-n-butoxymethyl acrylamid, t-Butyl acrylamide sulfonsäure, vinyl stearate, N-Methyl acrylamid, N-dimethyl acrylamid, N-dimethylaminoethyl (meth)acrylat, N-dimethylaminopropyl acrylamid, Acryloyl morpholin, Glycidyl methacrylat, n-Butyl methacrylat, Ethyl methacrylat, Allyl methacrylat, Cetyl methacrylat, Pentadecyl methacrylat, Methoxypolyethylen glycol (meth)acrylat, Diethylaminoethyl (meth)acrylat, Methacryloyloxyethylbernsteinsäure, Hexanediol diacrylat, Neopentyl glycol diacrylat, Triethylene glycol diacrylat, Polyethylene glycol diacrylat, Polypropylen glycol diacrylat, Pentaerythritol diacrylat monostearat, Glycol diacrylat, 2-Hydroxyethylmethacryloyl phosphat, Bisphenol A ethylen glycol Addukt acrylat, Bisphenol F ethylen glycol Addukt acrylat, Tricyclodecanemethanol diacrylat, Trishydroxyethyl isocyanurat diacrylat, 2-Hydroxy-l-acryloxy-3-methacryloxypropan, Trimethylolpropane triacrylat, Trimethylolpropan ethylenglycol -Addukt triacrylat, Trimethylolpropan propylen glycol Addukt triacrylat, Pentaerythritol triacrylat, Trisacryloyloxyethyl phosphat, Trishydroxyethyl isocyanurat triacrylat, modifiziertes epsilon -Caprolactam triacrylat, Trimethylolpropan ethoxy triacrylat, Glycerol propylen glycol Addukt triacrylat, Pentaerythritol tetraacrylat, Pentaerythritol ethylen glycol Addukt tetraacrylat, Ditrimethylolpropan tetraacrylat, Dipentaerythritol hexa(penta)acrylat, Dipentaerythritolmonohydroxy pentaacrylat, Acrylsäure, Methacrylsäure, Urethane acrylat, Epoxyacrylat, Polyesteracrylat, und/oder ungesättigte Polyesteracrylate. Ferner sind Co- und Terpolymere der genannten Acrylate mit Monomeren wie Styrol, Vinylacetat, Ethylvinylacetat, gamma - Acryloyloxypropyltrimethoxysilan, gamma - Acryloyloxypropyltriethoxysilan, gamma-Methacryloyloxypropyltrimethoxysilan, gamma-Methacryloyloxypropyltriethoxysilan, Dimethyldimethoxysilan, Dimethyldiethoxysilan, Methylphenyldimethoxysilan, Vinyltrimethoxysilan, Vinyltriethoxysilan, Divinyldimethoxysilan, Divinyldiethoxysilan, Itaconsäure, Vinylphosphonsäure, Estern der Vinylphosphonsäure und / oder Vinylester der Kochsäuren geeignet.

Als anorganisch-organische Beschichtungen für die Luminophore kommen im Sinne der Erfindung vorzugsweise Sol-Gele, Silikone und Silane in Betracht. Als Ausgangsmaterialien für die Sol-Gel-Polymere können beispielsweise die folgenden Organo-Siliziumverbindungen oder deren Mischungen dienen, die ausgewählt sind aus der Gruppe Tetramethoxysilan, Tetraethoxysilan, Tetra-n-propoxysilan, Tetraisopropoxysilan, Tetra-n-butoxysilan, Tetraisobutoxysilan, Tetrasec-butoxysilan, Tetra-tert-butoxysilan, Trimethoxysilan hydrid, Triethoxysilan hydrid, Tripropoxysilan hydrid, Methyltrimethoxysilan, Methyltriethoxysilan, Methyltripropoxysilan, Methyltriisopropoxysilan, Ethyltrimethoxysilan, Ethyltriethoxysilan, Propyltriethoxysilan, Butyltrimethoxysilan, Phenyltrimethoxysilan, Phenyltriethoxysilan, gamma -Glycidoxypropyltrimethoxysilan, gamma - Acryloyloxypropyltrimethoxysilan, gamma -Methacryloyloxypropyltrimethoxysilan, Dimethyldimethoxysilan, Methylphenyldimethoxysilan, Vinyltrimethoxysilan, Vinyltriethoxysilan, Divinyldimethoxysilan, Divinyldiethoxysilan, Aminopropyltriethoxysilan, 3-Aminopropyltrimethoxysilan, 3-Aminopropyltriethoxysilan, 3-Aminopropylmethyldimethoxysilan, 3-Aminopropylmethyldiethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminopropyltriethoxysilan, N-(2-Aminoethyl)-3-amino-propylmethyldimethoxysilan, N-(2-Aminoethyl)-3-aminopropylmethyl-diethoxysilan und / oder (3-Trimethoxysilylpropyl)-diethylenetriamine. Ferner sind alkylen- oder arylenverbrückte Di- oder Oligosilane wie 1,2-Bis(triethoxysilyl)ethan, 1,2-Bis(trimethoxysilyl)ethan, 1,4-Phenylenbis(triethoxysilan), 1,4-Phenylenbis(trimethoxysilan) geeignet. Zudem können Aluminiumsalze, Aluminiumalkoholate, Zinksalze, Zinkalkoholate, Zirkonsalze, Zirkonalkoholate, Titansalze, Titanalkoholate, Eisensalze, Eisenalkoholate, Mangansalze oder Manganalkoholate als Edukte der Systeme eingesetzt werden.

Die Beschichtung oder das Polymer wird bevorzugt hergestellt in Wasser und / oder organischen Lösungsmitteln, gegebenenfalls unter Zuhilfenahme von Dispergiermitteln, insbesondere in mono-, oligo- oder polyfunktionellen Alkoholen, besonders bevorzugt in wässrigen Lösungen vorgenannter Alkohole. Die Vernetzung durch Hydrolyse der Bausteine und anschließende Kondensation der hydrolysierten Edukte wird durch mineralische oder organische Säuren, Alkali, organische Basen, Übergangsmetallkatalysatoren, wie Titanate und / oder Zirkonate und/oder protische Lösungsmittel, bevorzugt Wasser vermittelt, da dies aus Sicherheitsaspekten wie Brennbarkeit und aus Umweltgesichtspunkten vorteilhaft ist, wobei man die Beschichtungsmittel als kolloidale Lösung oder Dispersion erhält. Auch können die oben aufgeführten Silane direkt auf das Pigment appliziert werden und die Vernetzung zwischen Silan und der Oberfläche des Pigments kann durch einen der genannten Vermittler initiiert werden.

Silikonpolymere bestehen meist aus der sich wiederholenden Einheit Dimethylsiloxan, die zum Beispiel durch Äquilibrierungsreaktionen durch andere Siloxangruppen ergänzt werden kann.

Das Polymer hat demnach die Struktur

R"[-(Y-Si(Me)₂)ₙ-(Z-Si(RR')ₘ]-R"'

Dabei nehmen m und n unabhängig voneinander Werte zwischen 0 und 100000 ein. Die mit zwei Methylgruppen (als Me in dem oben genannten Formelschema bezeichnet) funktionalisierte Basiseinheit - (O-Si(Me)₂)- kann teilweise oder vollständig durch Einheiten des Typs - (O-SiRR')- ersetzt werden, wobei R und R' unabhängig voneinander modifiziert sein können und gegebenenfalls funktionalisierte organische Reste des Typs Alkyl, Aryl, Alkenyl, Alkylaryl, Arylalkyl, Arylalkenyl, Alkenylaryl, Wasserstoff, Hydroxyl, Amin enthalten können. Die Reste können unmittelbar an das zentrale Siliziumatom oder über ein Heteroatom, wie Sauerstoff oder Stickstoff, daran gebunden sein. Die Siliziumeinheiten werden über eine Gruppe Y verbunden oder sind direkt aneinander gebunden. Y und Z werden unabhängig voneinander aus den vorgenannten organischen Gruppen oder aus der Gruppe der genannten Heteroatome gewählt. Das Polymer kann in α,ω-Position Endgruppen R" und / oder R"' tragen aus den zuvor benannten Gruppen, die unabhängig voneinander gewählt werden können.

Auch können Mischungen der Polymere oder Beschichtungen im Sinne der Erfindung eingesetzt werden. Diese Mischungen können durch Formulierung und / oder durch chemische Verknüpfungen der verschiedenen Polymere / Beschichtungen, beispielsweise im Sinne einer Core-Shell-Verkapselung oder eines Interpenetrating Networks, miteinander erfolgen.

Die Luminophore werden in Form von Dispersionen, Slurrys, Masterbatches und / oder Pulvern der Spinnmasse direkt beigefügt und die lumineszierenden Fasern ausgesponnen. Diese Fasern können entweder durch Lösungs- und Fällungsmethoden oder durch chemische Funktionalisierung, Lösung und anschließende Fällung, wie zum Beispiel ' durch das Viskose-, das Cupro- oder das Lyocellverfahren hergestellt werden. Auch die Verfahren zur Herstellung von Celluloseacetat oder Celluloseestern können zur Herstellung der Fasern erfindungsgemäß eingesetzt werden.

Zur Herstellung der Dispersionen oder Lösungen können beispielsweise Dispergierhilfsmittel aus der Gruppe der anionaktiven, kationaktiven oder nicht-ionogenen Tenside eingesetzt werden. Besonders bevorzugt sind aus Gründen der Verträglichkeit mit anderen Textilhilfsmitteln die anionaktiven oder nicht-ionogenen Tenside. Zur Einstellung der Viskosität des Textilhilfsmittels ist die Zugabe von rheologischen Additiven, wie Carboxyalkylpolysacchariden oder Polyacrylaten, möglich.

Die beschichteten Luminophore und diese enthaltenen Zubereitungsformen können auch mit üblichen, dem Fachmann bekannten Textilhilfsmitteln kombiniert und gemeinsam in textilen Standardverfahren appliziert werden. Dazu zählen zum Beispiel Fluorcarbone, Weichmacher, Hochveredlungsharze, Aufheller, Farbstoffe, Hydrophilierungs- oder Hydrophobierungsmittel, Anti-Pilling-Additive, Fixierer, Vernetzer, Tenside, polymere Binder, Kleber, Schiebefestmittel und / oder Pigmente. Die so erhaltenen Textilhilfsmittel können als Flotten, Schäume oder Pasten zur textilen Veredlung von Fasern, Geweben, Gewirken oder Vliesen eingesetzt werden. Auch die Kombination dieser genannten Additive und der vorgenannten Komponenten zu einer Zubereitung zur Veredlung von Textilien ist erfindungsgemäß. Als geeignete textiltechnische Prozesse kommen beispielsweise Ausziehverfahren oder Zwangsapplikationen wie Beschichtung, Ausrüstung durch Foulardieren, Druck, Sprayverfahren, Einzelfadenapplikation und/oder Färben infrage.

### Beispiele:

Alle Prozentangaben in den Beispielen sind Masseprozentangaben. Als ppm ist ein 1 mg / kg definiert. Die Rückstände der Pigmente wurden mittels ICP-OES (induktiv gekoppeltes Plasma mit optischer Emissionsspektroskopie, Thermo Scientific ICP-OES iCAP 6500) analysiert. Als Zersetzungsgrad ist die Menge definiert, die nach den Reaktionsbedingungen bereits abgebaut wurde.

### Referenzbeispiel 1-3:

Handelsübliche Luminophore wurden in 10 Gew.-%iger Schwefelsäure auf 90 °C erhitzt. Nach 5 min und 15 min wurde der Zersetzungsgrad bestimmt.

| Referenzbeispiel | Luminophor | Zersetzungsgrad nach 5 min | Zersetzungsgrad nach 15 min |
|---|---|---|---|
| 1 | IRUCG IR-Phosphor, Fa. LDP LLC | 64% | 92% |
| 2 | F(a)SD-546-4, Fa. Luminophor | 78% | 98% |
| 3 | F(a)SD-475-2, Fa. Luminophor | 81% | 100% |

### Ausführungsbeispiel 1:

5 g des in Referenzbeispiel 1 eingesetzten Luminophors wurden in 500 mL absolutem Methanol unter Inertgasatmosphäre vorgelegt und unter Rühren mit 500 µL Dynasylan^{®} MEMO und 1 mL Methylmethacrylat vermischt. Zum Starten der Polymerisation wurden 14 mg Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet.
Diese so beschichteten Luminophore wurden den in Referenzbeispiel 1 beschriebenen Bedingungen unterworfen. Nach 15 min waren 17% der beschichteten Partikel nicht zersetzt.

### Ausführungsbeispiel 2:

5 g des in Referenzbeispiel 1 eingesetzten Luminophors wurden in 500 ml entgastem destilliertem Wasser unter Inertgasatmosphäre vorgelegt und unter Rühren mit 1 mL der Isomerenmischung von 2-Hydroxypropylmethacrylat und 3-Hydroxypropylmethacrylat vermischt. Zum Starten der Polymerisation wurden 14 mg Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet. Diese Partikel wurden den in Referenzbeispiel genannten sauren Bedingungen unterworfen und nach 15 min waren 28% der Partikel intakt.

### Ausführungsbeispiel 3:

5 g des in Referenzbeispiel 1 eingesetzten Luminophors wurden in 500 ml entgastem destilliertem Wasser unter Inertgasatmosphäre vorgelegt und unter Rühren wurde eine Mischung aus 5% Tubicoat ASD (Polyacrylat-Copolymer der CHT R. Beitlich GmbH) und 2% iSys LTX (Sol-Gel-Produkt der CHT R. Beitlich GmbH) zugemischt. Die Partikel wurden 1 h bei 40 °C gerührt, abfiltriert und im Trockenschrank bei 80 °C bis zur Gewichtskonstanz getrocknet. Die so erhaltenen Partikel wurden den im Referenzbeispiel genannten sauren Bedingungen unterworfen und nach 15 min waren noch 40% der Partikel intakt.

### Ausführungsbeispiel 4:

5 g des in Referenzbeispiel 2 eingesetzten Luminophors wurden in 500 mL absolutem Methanol unter Inertgasatmosphäre vorgelegt und unter Rühren mit 500 µL Dynasylan^{®} MEMO und 1 mL Methylmethacrylat vermischt. Zum Starten der Polymerisation wurden 14 mg Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet.
Diese so beschichteten Luminophore wurden den in Referenzbeispiel 1 beschriebenen Bedingungen unterworfen. Nach 15 min waren 18% der beschichteten Partikel nicht zersetzt.

### Ausführungsbeispiel 5:

5 g des in Referenzbeispiel 2 eingesetzten Luminophors wurden in 500 ml entgastem destilliertem Wasser unter Inertgasatmosphäre vorgelegt und unter Rühren mit 1 mL der Isomerenmischung von 2-Hydroxypropylmethacrylat und 3-Hydroxypropylmethacrylat vermischt. Zum Starten der Polymerisation wurden 14 mg Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet. Diese Partikel wurden den in Referenzbeispiel genannten sauren Bedingungen unterworfen und nach 15 min waren 42% der Partikel intakt.

### Ausführungsbeispiel 6:

5 g des in Referenzbeispiel 2 eingesetzten Luminophors wurden in 500 ml entgastem destilliertem Wasser unter Inertgasatmosphäre vorgelegt und unter Rühren wurde eine Mischung aus 5% Tubicoat ASD (Polyacrylat-Copolymer der CHT R. Beitlich GmbH) und 2% iSys LTX (Sol-Gel-Produkt der CHT R. Beitlich GmbH) zugemischt. Die Partikel wurden 1 h bei 40 °C gerührt, abfiltriert und im Trockenschrank bei 80 °C bis zur Gewichtskonstanz getrocknet. Die so erhaltenen Partikel wurden den im Referenzbeispiel genannten sauren Bedingungen unterworfen und nach 15 min waren noch 25% der Partikel intakt.

### Ausführungsbeispiel 7:

5 g des in Referenzbeispiel 3 eingesetzten Luminophors wurden in 500 ml entgastem destilliertem Wasser unter Inertgasatmosphäre vorgelegt und unter Rühren mit 1 mL der Isomerenmischung von 2-Hydroxypropylmethacrylat , und 3-Hydroxypropylmethacrylat vermischt. Zum Starten der Polymerisation wurden 14 mg Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet. Diese Partikel wurden den in Referenzbeispiel genannten sauren Bedingungen unterworfen und nach 15 min waren 39% der Partikel intakt.

### Ausführungsbeispiel 8:

5 g des in Referenzbeispiel 3 eingesetzten Luminophors wurden in 500 ml entgastem destilliertem Wasser unter Inertgasatmosphäre vorgelegt und unter Rühren wurde eine Mischung aus 5% Tubicoat ASD (Polyacrylat-Copolymer der CHT R. Beitlich GmbH) und 2% iSys LTX (Sol-Gel-Produkt der CHT R. Beitlich GmbH) zugemischt. Die Partikel wurden 1 h bei 40 °C gerührt, abfiltriert und im Trockenschrank bei 80 °C bis zur Gewichtskonstanz getrocknet. Die so erhaltenen Partikel wurden den im Referenzbeispiel genannten sauren Bedingungen unterworfen und nach 15 min waren noch 24% der Partikel intakt.

### Ausführungsbeispiel 9-11 - Variationen der Schichtdicke:

5 g des in Referenzbeispiel 2 eingesetzten Luminophors wurden in 500 ml entgastem destilliertem Wasser unter Inertgasatmosphäre vorgelegt und unter Rühren mit der Isomerenmischung von 2-Hydroxypropylmethacrylat und 3-Hydroxypropylmethacrylat vermischt. Zum Starten der Polymerisation wurde Ammoniumpersulfat zugegeben und die Reaktionsmischung bei 60 °C für 6 h gerührt. Die beschichteten Partikel wurden abfiltriert und im Trockenschrank bei 80 °C bis zur Gewichtskonstanz getrocknet. Diese Partikel wurden den in Referenzbeispiel genannten sauren Bedingungen unterworfen und die Anteile unzersetzter Pigmente wurden quantitativ analysiert.

| | Methacrylat | Ammoniumpersulfat | Zersetzungsgrad nach 15 min |
|---|---|---|---|
| 9 | 0,25 ml | 3,5 mg | 52% |
| 10 | 1 ml | 14 mg | 49% |
| 11 | 2,5 ml | 35 mg | 39% |

### Ausführungsbeispiel 12:

Ein Popelinemuster aus Polyester wurde am Foulard mit einer Flotte bestehend aus dem Luminophor aus Referenzbeispiel 1 und 50 g/L des Polyurethan-Binders Arristan EPD der Fa. CHT R. Beitlich GmbH ausgerüstet. Die Menge des Luminophors wurde durch Flottenaufnahmeversuche so eingestellt, dass 40 ppm Luminophor auf der Ware auflagen. Nach Trocknen am Spannrahmen bei 120 °C für 3 min konnte man das Pigment homogen verteilt fluoreszenzspektroskopisch nachweisen. Nach einer Haushaltswäsche mit 40 °C war der Luminophor noch zu 43%, nach 10. Wäschern noch zu 15% sicher nachweisbar.

### Ausführungsbeispiel 13:

Lumineszierende Partikel aus Referenzbeispiel 1 wurden auf verschiedene mittlere Teilchengrößen vermahlen und anschließend gemäß Ausführungsbeispiel 1 beschichtet. Danach wurden sie homogen in eine wässrige Lösung, die mit einem Verdicker auf Acrylatbasis (Hycryl^{®} 0262 der Fa. Arkema) auf 100 mPas (Spindel 1, Brookfield-Viskosimeter) eingestellt wurde, eingerührt. Die Absetzgeschwindigkeit der Partikel wurde mit einem handelsüblichen Laserpen (λ = 980 nm) bestimmt.

| Beispiel | d₅₀ [µm] | Absetzungszeit^{*} [h] |
|---|---|---|
| 1 | 4.0 | 0.5 |
| 2 | 2.1 | 12 |
| 3 | 0.9 | 72 |

| | | |
|---|---|---|
| * Die Absetzungszeit umfasst die Zeitspanne, bis in der überstehenden Lösung kein Pigment mehr nachweisbar ist. | | |

### Ausführungsbeispiel 14:

Lumineszierende Partikel aus Referenzbeispiel 2 wurden auf verschiedene mittlere Teilchengrößen vermahlen und anschließend gemäß Ausführungsbeispiel 5 beschichtet. Danach wurden sie homogen in eine wässrige Lösung, die mit einem Verdicker auf Celluloseetherbasis (Tubicoat Verdicker HEC der Fa. CHT) auf 100 mPas (Spindel 1, Brookfield-Viskosimeter) eingestellt wurde, eingerührt.

Durch Zentrifugieren bei veschiedenen Drehzahlen wurde die Sedimentationsstabilität geprüft. Die Vollständigkeit der Absetzung wurde mit einem handelsüblichen Laserpen (λ = 980 nm) bestimmt.

| Drehzahl [rpm] | d₅₀ [µm] | Absetzung |
|---|---|---|
| 3000 | 11,6 | Vollständig |
| | 0,96 | Unvollständig |

### Ausführungsbeispiel 15:

In eine spinnfertige Modalviskose (5,97% Cellulose, 6,14% Alkali) wurde eine Dispersion des in Ausführungsbeispiels 3 genannten lumineszierenden Pigments homogen eingerührt. Es wurden unterschiedliche Zuschlagmengen des Pigments in Bezug auf die Cellulose zur Spinnmasse zugesetzt und über eine Düse mit 1380 Löchern a 45 µm in ein übliches schwefelsaures Spinnbad versponnen, wobei keinerlei Auffälligkeiten feststellbar waren. Die Fasern wurden vollständig gewaschen, getrocknet und anschließend die Faserfestigkeit und Faserdehnung gemessen.

| | Beispiel | Luminophor auf Cellulose [ppm] | Faserfestigkeit konditioniert [cN/tex] | Dehnung konditioniert [%] |
|---|---|---|---|---|
| Modal 1,3 dtex | 1 | 7,5 | 35,8 | 12,8 |
| | 2 | 1500 | 33,6 | 12,3 |

### Ausführungsbeispiel 16:

Zu 78% NMMO in Wasser wurde eine Dispersion, die 2% des in Ausführungsbeispiels 3 genannten lumineszierenden Pigments enthält, homogen eingerührt und mittels Ultraturrax^{®} (Hochgeschwindigkeitsrührer) homogenisiert. Anschließend wurde Zellstoff zugegeben und danach unter Vakuum Wasser abdestilliert, um die Cellulose in Lösung zu bringen. Die Spinnmasse wurde in ein Spinnbad (20% NMMO) versponnen, das beobachtete Spinnverhalten war sehr gut. Die Fasern wurden anschließend NMMO-frei gewaschen, dann getrocknet und abschließend Faserfestigkeit und Faserdehnung bestimmt.

| | Beispiel | Luminophor auf Cellulose [ppm] | Faserfestigkeit konditioniert [cN/tex] | Dehnung konditioniert [%] |
|---|---|---|---|---|
| Lyocell 1,3 dtex | 1 | 1000 | 37 | 10,6 |
| | 2 | 30000 | 34,1 | 9,8 |

## Patentansprüche

1. Natürliche und / oder synthetische Fasern, daraus gefertigte Textilien, Formkörper und Halbzeuge enthaltend Luminophore mit einer Oberflächenbeschichtung auf der Basis von organischen, anorganisch-organischen und/oder anorganischen Beschichtungsmitteln in der Masse und/oder der Oberfläche, wobei die Menge von Luminophor zu trockener Faser, trockenem Textil, trockenem Formkörper oder trockenem Halbzeug 0,01 bis 100 ppm beträgt.

2. Fasern, daraus gefertigte Textilien, Formkörper und Halbzeuge nach Anspruch 1, **dadurch gekennzeichnet, dass** sie Regeneratfasern oder cellulosische Formkörper umfassen.

3. Fasern, daraus gefertigte Textilien, Formkörper und Halbzeuge gemäß Anspruch 1 oder 2, **dadurch gekennzeichnet dass** die Menge von Luminophor zu trockener Faser, trockenem Textil, trockenem Formkörper oder trockenem Halbzeug 0,1 bis 50 ppm, besonders 0,5 bis 10 ppm beträgt.

4. Fasern, daraus gefertigte Textilien, Formkörper und Halbzeuge gemäß einem der Ansprüche 1 bis 3, **dadurch gekennzeichnet, dass** die mittlere Teilchengröße der Luminophore 0,1 bis 30 µm, insbesondere von 0,5 bis 4 µm, besonders von 0,5 bis 1 µm beträgt.

5. Fasern, daraus gefertigte Textilien, Formkörper und Halbzeuge gemäß einem der Ansprüche 1 bis 4, **dadurch gekennzeichnet, dass** die Luminophore eine anorganische Beschichtung enthaltend Phosphate, Pyrophosphate, Polyphosphate und/oder Silikate aufweisen.

6. Fasern, daraus gefertigte Textilien, Formkörper und Halbzeuge gemäß einem der Ansprüche 1 bis 4, **dadurch gekennzeichnet, dass** die Luminophore eine anorganisch-organische Beschichtung enthaltend Silane, Silikone und / oder Sol-Gele aufweisen.

7. Fasern, daraus gefertigte Textilien, Formkörper und Halbzeuge gemäß einem der Ansprüche 1 bis 4, **dadurch gekennzeichnet, dass** die Luminophore eine organischen Beschichtung enthaltend Polyacrylate, Polyurethane, Polybutadiene, Poly-Styrol-Butadiene, Epoxidharze, Polyesterharze und/oder Ethylvinylacetatharze aufweisen

8. Verwendung von Fasern, Formkörpern und Halbzeugen nach einem der Ansprüche 1 bis 5 zur Herstellung von Textilien, textilen Gelegen, Vliesen, Fasern, Fäden, Kompositen und / oder deren Vorprodukte, die natürliche und/oder synthetische Fasern enthalten.

9. Verwendung nach Anspruch 8 durch Applikation textiltechnischer Prozesse, insbesondere durch Ausziehverfahren oder Zwangsapplikationen wie Beschichtung, Ausrüstung durch Foulardieren, Druck, Sprayverfahren, Einzelfadenapplikation und/oder Färben.

10. Textilien enthaltend Fasern gemäß einem der Ansprüche 1 bis 7.

## Claims

1. Natural and/or synthetic fibers, textiles, molded parts and semifinished products made therefrom, containing luminophores with a surface coating based on organic, inorganic-organic and/or inorganic coating agents in the bulk and/or on the surface, wherein the quantity of luminophore to the dry fiber, dry textile, dry molded part or dry semifinished product is from 0.01 to 100 ppm.

2. The fibers, textiles, molded parts and semifinished products made therefrom according to claim 1, **characterized by** comprising regenerate fibers or cellulosic molded parts.

3. The fibers, textiles, molded parts and semifinished products made therefrom according to claim 1 or 2, **characterized in that** the quantity of luminophore to the dry fiber, dry textile, dry molded part or dry semifinished product is from 0.1 to 50 ppm, especially from 0.5 to 10 ppm.

4. The fibers, textiles, molded parts and semifinished products made therefrom according to any of claims 1 to 3, **characterized in that** the mean particle size of the luminophores is from 0.1 to 30 µm, especially from 0.5 to 4 µm, specifically from 0.5 to 1 µm.

5. The fibers, textiles, molded parts and semifinished products made therefrom according to any of claims 1 to 4, **characterized in that** the luminophores have an inorganic coating containing phosphates, pyrophosphates, polyphosphates and/or silicates.

6. The fibers, textiles, molded parts and semifinished products made therefrom according to any of claims 1 to 4, **characterized in that** the luminophores have an inorganic-organic coating containing silanes, silicones and/or solgels.

7. The fibers, textiles, molded parts and semifinished products made therefrom according to any of claims 1 to 4, **characterized in that** the luminophores have an organic coating containing polyacrylates, polyurethanes, polybutadienes, poly(styrene-butadienes), epoxy resins, polyester resins and/or ethylvinyl acetate resins.

8. Use of fibers, molded parts and semifinished products according to any of claims 1 to 5 for producing textiles, laid textile webs, non-wovens, fibers, threads, composites and/or precursors thereof, containing natural and/or synthetic fibers.

9. The use according to claim 8 by the application of processes of textile technology, especially by exhaust methods or compulsory applications, such as coating, finishing by padding, compression, spray methods, single thread application and/or dyeing.

10. Textiles containing fibers according to any of claims 1 to 7.

## Revendications

1. Fibres naturelles et/ou synthétiques, textiles, corps moulés et produits semi-finis fabriqués à partir de celles-ci, contenant des luminophores avec un revêtement de surface sur la base d'agents de revêtement organiques, inorganiques-organiques et/ou inorganiques, volumique et/ou surfacique, dans lesquels la quantité du luminophore au fibre sèche, textile sec, corps moulé sec ou produit semi-fini sec est de 0,01 à 100 ppm.

2. Fibres, textiles, corps moulés et produits semi-finis fabriqués à partir de celles-ci selon la revendication 1, **caractérisés en ce qu'**ils comprennent des fibres régénérées ou des corps moulés cellulosiques.

3. Fibres, textiles, corps moulés et produits semi-finis fabriqués à partir de celles-ci selon la revendication 1 ou 2, **caractérisés en ce que** la quantité du luminophore au fibre sèche, textile sec, corps moulé sec ou produit semi-fini sec est de 0,1 à 50 ppm, notamment de 0,5 à 10 ppm.

4. Fibres, textiles, corps moulés et produits semi-finis fabriqués à partir de celles-ci selon l'une quelconque des revendications 1 à 3, **caractérisés en ce que** la taille moyenne des particules du luminophore est de 0,1 à 30 µm, notamment de 0,5 à 4 µm, notamment de 0,5 à 1 µm.

5. Fibres, textiles, corps moulés et produits semi-finis fabriqués à partir de celles-ci selon l'une quelconque des revendications 1 à 4, **caractérisés en ce que** les luminophores présentent un revêtement inorganique contenant des phosphates, des pyrophosphates, des polyphosphates et/ou des silicates.

6. Fibres, textiles, corps moulés et produits semi-finis fabriqués à partir de celles-ci selon l'une quelconque des revendications 1 à 4, **caractérisés en ce que** les luminophores présentent un revêtement inorganique-organique contenant des silanes, des silicones et/ou des sols-gels.

7. Fibres, textiles, corps moulés et produits semi-finis fabriqués à partir de celles-ci selon l'une quelconque des revendications 1 à 4, **caractérisés en ce que** les luminophores présentent un revêtement organique contenant des polyacrylates, des polyuréthanes, des polybutadiènes, des poly(styrène-butadiènes), des résines époxy, des résines polyester et/ou des résines acétate d'éthylvinyle.

8. Utilisation de fibres, corps moulés et produits semi-finis selon l'une quelconque des revendications 1 à 5 pour la préparation de textiles, nappes textiles, matériaux non tissés, fibres, fils, composites et/ou précurseurs de ceux-ci, contenant des fibres naturelles et/ou synthétiques.

9. Utilisation selon la revendication 8 par l'application de procédés d'ingénierie textile, notamment par des procédés d'épuisement ou applications forcées, telles que revêtement, finissage par foulardage, impression, procédés de pulvérisation, application de monofils et/ou teinture.

10. Textiles contenant des fibres selon l'une quelconque des revendications 1 à 7.
